(19) Europäisches Patentamt
European Patent Office
Office européen des brevets

(11) EP 1 168 888 A2

(12) **EUROPEAN PATENT APPLICATION**

(43) Date of publication:
02.01.2002 Bulletin 2002/01

(51) Int Cl.⁷: $H05B\ 3/84$

(21) Application number: 01305701.3

(22) Date of filing: 29.06.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.06.2000 JP 2000197354**

(71) Applicant: **Nippon Sheet Glass Co., Ltd.**
**Osaka-shi, Osaka 541-8559 (JP)**

(72) Inventors:
• **Kawamoto, Shinji,**
**c/o Nippon Sheet Glass Co. Ltd.**
**Osaka-shi, Osaka 541-8559 (JP)**
• **Noguchi, Tatsuya,**
**c/o Nippon Sheet Glass Co. Ltd.**
**Osaka-shi, Osaka 541-8559 (JP)**

(74) Representative: **Matthews, Derek Peter**
**Frank B. Dehn & Co., European Patent Attorneys,**
**179 Queen Victoria Street**
**London EC4V 4EL (GB)**

(54) **Window glass for vehicle and method of manufacturing the same**

(57)     In a window glass for a vehicle comprising a glass sheet, a transparent conductive film and a pair of bus bars for feeding power to the film, this invention makes the amount of generated heat more uniform by providing a distribution in the surface resistance of the film, depending on the distribution of heat generated in the film. In one embodiment, the surface resistance of the conductive film decreases from the longer bus bar toward the shorter bus bar. In another embodiment, the surface resistance of the conductive film increases, as the spacing between the bus bars is smaller.

FIG. 3

**Description**

The present invention relates to a window glass for a vehicle with a transparent conductive film that can be heated electrically, and to a method for manufacturing the same. More particularly, the present invention relates to an electrically heated window glass that has few heat generation clusters.

JP H07 (1995)-309210A, for example, discloses a heating device for conductively heating the windshield glass of an electric automobile, which includes a transparent conductive film and bus bars at the upper and the lower edge of the windshield glass. This heating device is provided for the defogging of the windshield glass.

The inventors of the present invention have found out that applying this windshield glass leads to the following problems.

For example, an electrically heated windshield glass has a transparent conductive film formed on a windshield glass, and a pair of bus bars for feeding power to the film provided at the upper and lower edges thereof.

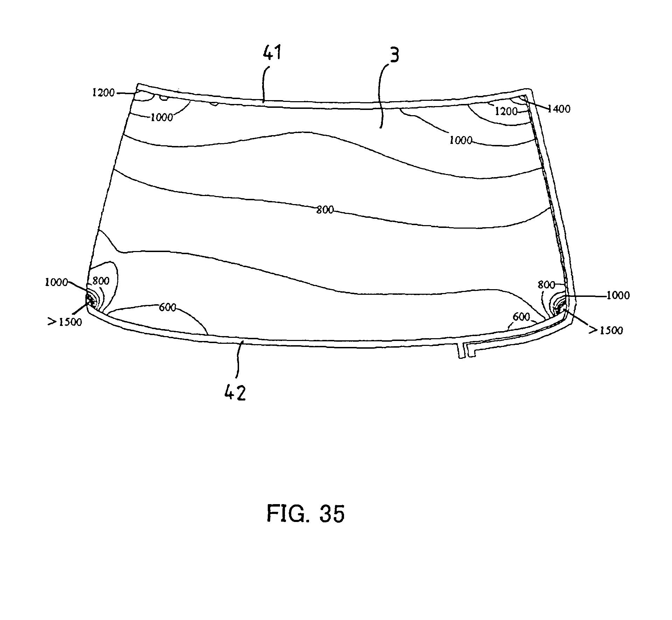

A first trouble spot is that the amount of heat generated at the top of the windshield glass differs from that generated at the bottom. Fig. 35 illustrates the isothermal lines in the windshield glass.

The upper edge of the windshield glass is usually shorter than the lower edge due to design considerations, so that a current running through the transparent conductive film 3 between the bus bars 41 and 42 tends to concentrate at the top of the windshield glass. Therefore, the amount of heat generated at the top edge of the glass is larger than that generated at the bottom edge.

A second trouble spot is that the amount of heat generated in the corners of the windshield glass becomes particularly large (see Fig. 35).

The spacing between the upper bus bar 41 and the lower bus bar 42 at both edges of the windshield glass is usually shorter than in the center thereof, so that currents tend to concentrate at the two edges. This tendency is especially conspicuous at the two edges of the lower bus bar. Therefore, the amount of heat generated at these portions is larger than at other portions. The reason why the spacing in the aforementioned region is shorter lies in the shape of the windshield glass.

Furthermore, at the upper edge of the windshield glass, the angle of the two corners is larger than a right angle. Usually, the current would flow at a right angle to the bus bar, but since the corner angles are larger than a right angle, the current to the corner is concentrated from a wider angle. Also for this reason, the amount of heat generated in this portion becomes larger than at other portions.

A third trouble spot occurs when trying to adapt a windshield glass with a transparent conductive film to VICS (Vehicle Information and Communication System) and ETC (Electronic Toll Collections).

The transparent conductive films used for conductively heating windshield glass are often made of alternate layers of ITO or ZnO films and Ag thin films. In this case, the Ag thin films, which are metal films, act as a shield and block the transmission of electromagnetic waves.

As a countermeasure, the transparent conductive film has to be cut away partially to let electromagnetic waves pass, which is necessary for the adaptation to VICS and/or ETC. To ensure the visual field for the driver, these portions where the transparent conductive film has been cut away are mostly provided away from the center of the windshield glass at the periphery next to the bus bars.

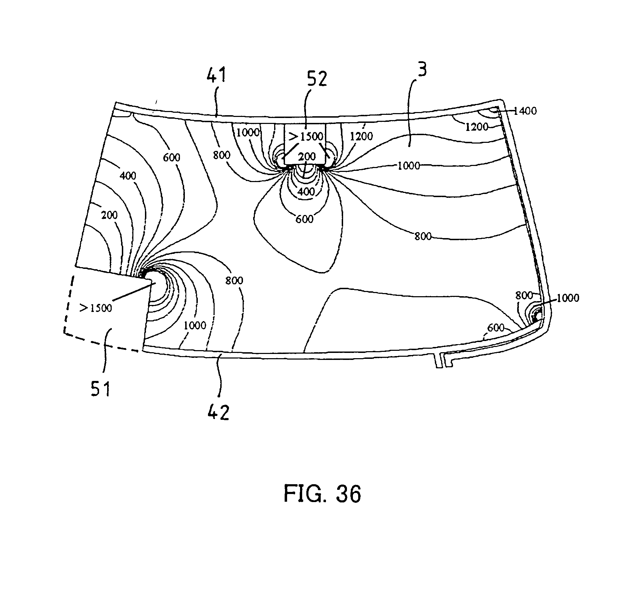

As shown in Fig. 36, if the transparent conductive film 3 is provided with such cutout portions 51 and 52, there is again the problem that the current tends to concentrate around these cutout portions (especially in the corners), and that the amount of heat generated around these portions is much larger than in the other portions.

A fourth trouble spot occurs when the cutout portions in the transparent conductive film are provided in the corners of the upper or lower edge.

In this case, it becomes difficult to supply current sufficiently to all the transparent conductive film, because no bus bar can be formed at the cutout portion. Therefore, the amount of heat generated at the portion next to the cutout portion becomes much smaller than in other portions (see Fig. 36).

When the amount of heat generated in the electrically heated glass with the transparent conductive film becomes very large as mentioned above, then there is the danger that the temperature of the electrically heated glass becomes too high, and, if it is a laminated glass, leads to deterioration of the intermediate resin film. Moreover, when there are differences in the amount of heat generated at different regions of the windshield glass, then this may lead to clusters of irregular defogging and defrosting.

In addition to the aforementioned electric automobiles, vehicles with internal combustion engines, in which the battery voltage is raised from 12 V or 24 V to, for example, 42 V are under development. Attempts have been made to use a transparent conductive film for the windshield defogging and defrosting also in vehicles having such high-voltage power sources. This is because power sources with higher voltages are advantageous with regard to heat generation efficiency.

It is thus an object of some embodiments of present invention to provide a window glass for a vehicle that can be heated electrically and have no regions in which the heat generation is extremely high, and in which there are few heat generation clusters.

It is another object of other embodiments of the present invention to provide a window glass for a vehicle that can be heated electrically and have no regions in which the heat generation is extremely high, and in which there are few heat generation clusters, even though the transparent conductive film is provided with cutout portions.

To achieve these objects, the present invention attempts to make the amount of generated heat more uniform by providing a distribution in the surface resistance of the transparent conductive film, depending on the distribution of heat generated in the transparent conductive film. According to the invention, the heat is generated more uniformly than that in a transparent conductive film with a uniform surface resistance.

The amount of heat W generated in the transparent conductive film is given by Equation 1.

$$W = J^2/\sigma \ [W/m^2] \hspace{2cm} (1),$$

where J is current density taking into account the film thickness (current density $\times$ film thickness) [A/m], and $\sigma$ is specific electric conductivity taking into account the film thickness (electrical conductivity of film $\times$ film thickness) [S/m].

As mentioned above, the current density tends to increase at the top of the glass. As a countermeasure, it is possible to make the specific electric conductivity $\sigma$, taking into account film thickness, at the upper portion of the transparent conductive film larger than at the lower portion. That is to say, from the definition of the specific electric conductivity taking into account the film thickness (electrical conductivity of film $\times$ film thickness), it can be seen that, when the electric conductivity is held constant, the film thickness should be increased.

Thus, the amount of heat generated can be reduced by increasing the film thickness of those areas where a lot of heat is generated. This can be likened to serially connecting a plurality of resistors of different resistances in the vertical direction of the transparent conductive film. That is to say, the current flowing through the resistors is constant, so that the amount of heat generated in the resistors is proportional to the surface resistance in each case. Consequently, the surface resistance is lowered and the amount of generated heat is reduced by increasing the thickness at those portions of the conductive film where the generated heat should be reduced.

Conversely, to balance the regions where large amounts of heat are generated when the spacing between the bus bars becomes small, it is possible to reduce the specific electric conductivity $\sigma$, taking into account film thickness, at these regions. That is to say, from the definition of the specific electric conductivity taking into account the film thickness (electrical conductivity of film $\times$ film thickness), it can be seen that, when the electric conductivity is held constant, the film thickness should be reduced.

Thus, the amount of heat generated can be reduced by reducing the film thickness of those areas where large amounts of heat are generated. This is opposite from the aforementioned case. This can be likened to a parallel connection of a plurality of resistors of different resistances in the lateral direction of the transparent conductive film. That is to say, the current flowing through the resistors is constant, so that the amount of heat generated in the resistors is proportional to the current. Consequently, the flow of current is restrained, that is, the surface resistance is increased at those portions where the generated heat should be reduced. To increase the surface resistance, it is possible to reduce the thickness of the conductive film.

As becomes clear from these considerations, the specific electric conductivity taking into account the film thickness can be replaced by the surface resistance of the transparent conductive film. This surface resistance can be controlled by changing the film thickness. The surface resistance is measured in $\Omega/\square$ (Ohm/square).

That is to say, as a first embodiment, the present invention provides a vehicle window glass that includes a glass sheet and a transparent conductive film and a pair of bus bars for feeding power to the transparent conductive film. The bus bars include a longer bus bar and a shorter bus bar, and the transparent conductive film and the bus bars are formed on the glass sheet. This window glass is characterized in that the surface resistance of the conductive film decreases from the longer bus bar toward the shorter bus bar.

A second embodiment of the present invention provides a vehicle window glass that includes a glass sheet and a transparent conductive film and a pair of bus bars for feeding power to the transparent conductive film. The transparent conductive film and the bus bars are formed on the glass sheet. This window glass is characterized in that the surface resistance of the conductive film increases as the spacing between the bus bars is smaller.

A third embodiment of the present invention provides a vehicle window glass that includes a glass sheet and a transparent conductive film and a pair of bus bars for feeding power to the transparent conductive film. The conductive film is provided with a cutout portion along at least one of the edges of the glass sheet. The transparent conductive film and the bus bars are formed on the glass sheet. This window glass is characterized in that the surface resistance of the conductive film decreases from the cutout portion along the at least one of the edges.

In these vehicle window glasses, the surface resistance can be changed by changing the film thickness of the conductive film. The film thickness may change continuously.

A fourth embodiment of the present invention provides a vehicle window glass that includes a glass sheet and a transparent conductive film and a pair of bus bars for feeding power to the transparent conductive film. A corner of the conductive film is provided with a cutout portion. The transparent conductive film and the bus bars are formed on the glass sheet. This window glass is characterized in that one of the bus bars turns the said corner and extends to an adjacent edge of the conductive film and that a region is provided between the cutout portion and the other bus bar where the surface resistance is higher than at other regions of the conductive film.

This region with higher surface resistance can have a film thickness that is smaller than that of the other regions of the conductive film.

A fifth embodiment of the present invention provides a vehicle window glass that includes a glass sheet and a transparent conductive film and a pair of bus bars for feeding power to the transparent conductive film. The transparent conductive film and the bus bars are formed on the glass sheet. This window glass is characterized in that the conductive film is provided with a comb-shaped portion that has cutout portions in contact with one of the bus bars.

The window glass of the present invention can include at least two glass sheets and a thermoplastic resin film for bonding the glass sheets, and the conductive film and the bus bars are provided on a surface of one of the glass sheets.

The conductive film can include a first metal oxide film, a first Ag film, a second metal oxide film, a second Ag film, and a third metal oxide film that are layered in that order, and a ceramic mask can be provided at a portion where the bus bars are formed.

The present invention provides a method for manufacturing a window glass for a vehicle that includes a glass sheet, and a transparent conductive film and a pair of bus bars for feeding power to the transparent conductive film formed on the glass sheet.

A first embodiment of the method is characterized in that the conductive film is formed by sputtering using a sputtering target while arranging a shielding plate at a predetermined position between the glass sheet and the sputtering target.

The shielding plate can have an aperture pattern in which the aperture ratio changes continuously or stepwise.

A second embodiment of the method is characterized in that the conductive film is formed by sputtering using a sputtering target while changing the spacing between the glass sheet and the sputtering target.

Fig. 1 is a plan view illustrating an embodiment of a window glass in accordance with the present invention.

Fig. 2 is a cross-sectional view illustrating the configuration of an example of the transparent conductive film used for a window glass in accordance with the present invention.

Fig. 3 illustrates the distribution of the specific electric conductivity of the transparent conductive film in Example 1.

Fig. 4 illustrates the shielding plates having an aperture pattern that are used for achieving a transparent conductive film with the film thickness distribution of Example 1.

Fig. 5 shows the heat generation distribution chart of the transparent conductive film in Example 1.

Figs. 6A and 6B show an example of the continuous film thickness distribution. Fig. 6A is a plan view and Fig. 6B is a cross sectional view taken along a center lineof Fig. 6A.

Fig. 7 illustrates how the transparent conductive film can be provided with a continuous film thickness distribution by sputtering.

Fig. 8 illustrates the distribution of the specific electric conductivity of the transparent conductive film in Example 2.

Fig. 9 illustrates the shielding plates having an aperture pattern that are used for achieving a transparent conductive film with a continuous film thickness distribution in the upper corners in Example 2.

Fig. 10 shows the heat generation distribution chart of the transparent conductive film in Example 2.

Fig. 11 illustrates the distribution of the specific electric conductivity of the transparent conductive film in Example 3.

Fig. 12 illustrates the shape and the arrangement of the shielding plates that are used for achieving the film thickness distribution of the transparent conductive film in Example 3.

Fig. 13 shows the heat generation distribution chart of the transparent conductive film in Example 3.

Fig. 14 illustrates the distribution of the specific electric conductivity of the transparent conductive film in Example 4.

Fig. 15 illustrates the shape and the arrangement of the shielding plates that are used for achieving the film thickness distribution of the transparent conductive film in Example 4.

Fig. 16 shows the heat generation distribution chart of the transparent conductive film in Example 4.

Fig. 17 illustrates the distribution of the specific electric conductivity of the transparent conductive film in Example 5.

Fig. 18 illustrates the shape and the arrangement of the shielding plates that are used for achieving the film thickness distribution of the transparent conductive film in Example 5.

Fig. 19 shows the heat generation distribution chart of the transparent conductive film in Example 5.

Fig. 20 illustrates the pattern of the bus bars in Preparatory Example 1.

Fig. 21 shows the heat generation distribution chart of Preparatory Example 1.

Fig. 22 illustrates the distribution of the specific electric conductivity of the transparent conductive film in Example 6.

Fig. 23 illustrates the shape and the arrangement of the shielding plates that are used for achieving the film thickness distribution of the transparent conductive film in Example 6.

Fig. 24 shows the heat generation distribution chart of the transparent conductive film in Example 6.

Fig. 25 illustrates the distribution of the specific electric conductivity of the transparent conductive film in Example 7.

Fig. 26 illustrates the shape and the arrangement of the shielding plates that are used for achieving the film thickness distribution of the transparent conductive film in Example 7.

Fig. 27 shows the heat generation distribution chart of the transparent conductive film in Example 7.

Fig. 28 illustrates the comb-shaped cutout pattern of Example 8.

Fig. 29 illustrates the distribution of the specific electric conductivity of the transparent conductive film in Example 8.

Fig. 30 illustrates the shape and the arrangement of the shielding plates that are used for achieving the film thickness distribution of the transparent conductive film in Example 8.

Fig. 31 illustrates the relative position of the glass sheet, the shielding plates and the target in Example 8.

Fig. 32 shows the heat generation distribution chart of the transparent conductive film in Example 8.

Fig. 33 shows the maximum temperature as a function of the elapsed time in the conducting state, for a comb-shaped cutout pattern and for a pattern in which the transparent conductive film covers the entire surface.

Fig. 34 illustrates how an electromagnetic wave transmission characteristic is measured.

Fig. 35 shows the heat generation distribution chart in a conventional transparent conductive film without film thickness distribution.

Fig. 36 shows the heat generation distribution chart in a conventional transparent conductive film with cutout portions.

*Basic configuration of the window*

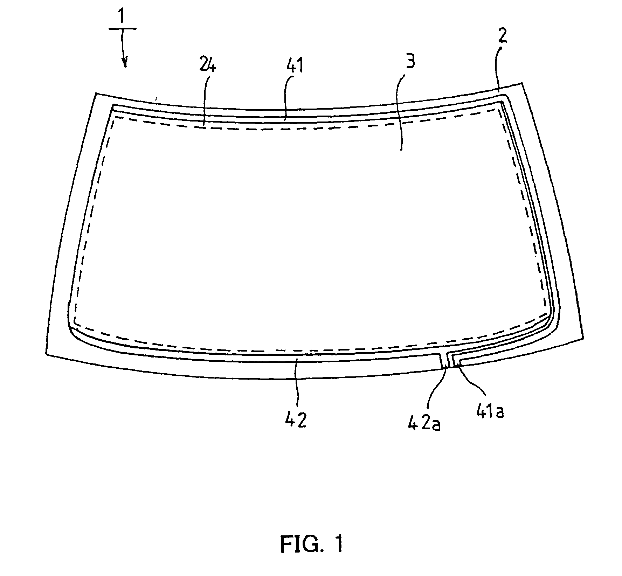

As shown in Fig. 1, the vehicle window glass 1 is basically provided with a transparent conductive film 3, and power-feeding bus bars 41 and 42 arranged at the upper and the lower edge of a glass sheet 2. In this example, feeding points 41a and 42a of the bus bars 41 and 42 are put together in one location, so that the wiring of the feeding lines is easy.

The vehicle window glass of the present invention can be manufactured basically with the following steps:

(1) Two glass sheets of predetermined size are cut out from a flat glass.
(2) The edge surfaces of the glass sheets are polished.
(3) Bus bars are printed on one of the glass sheets.
(4) The two glass sheets are placed on one another, and are shaped by a sagging process.
(5) A transparent conductive film is formed by sputtering on one of the glass sheets.
(6) The two glass sheets are bonded together with a PVB (Polyvinyl Butyral) film to form a laminated glass.

With regard to the outer appearance, it is preferable to provide a ceramic mask on the portions corresponding to the bus bars. This printed mask 24 is preferably formed on a peripheral region on a glass sheet 2 to shield the bus bars 41 and 42 (Fig.1). There is no particular limitation to the pattern for the ceramic mask, but a dot pattern is appropriate.

*Method for manufacturing the transparent conductive film*

A conventional film can be used as the transparent conductive film of the present invention. The following is an example of a suitable transparent conductive film:

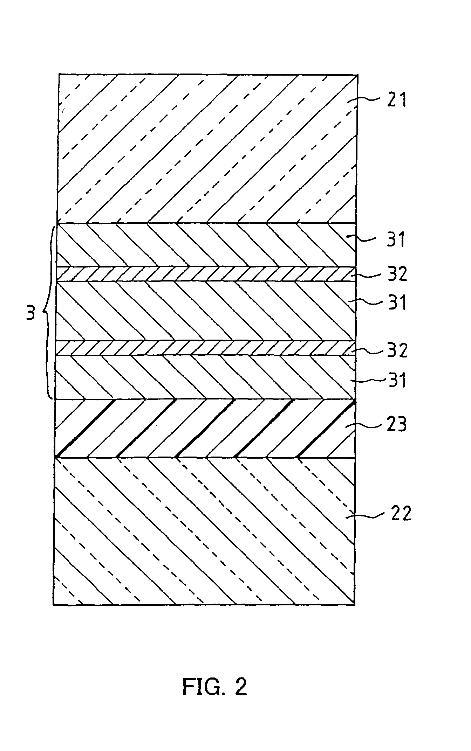

As shown in Fig.2, a suitable transparent conductive film 3 can be formed by layering a metal oxide film 31 and a metal film 32 on a glass sheet 21 alternately. The film, for example, includes a first metal oxide film, a first Ag film, a second metal oxide film, a second Ag film, and a third metal oxide film in that order on a glass sheet by sputtering.

An example of the film thicknesses can be given as:

first metal oxide film: 20 to 40 nm
first Ag film: 7 to 11 nm
second metal oxide film: 60 to 100 nm
second Ag film: 7 to 11 nm
third metal oxide film: 20 to 40 nm

It is possible to form these five films for the transparent conductive film in order on a glass sheet obtained by the float method, using an inline dc sputtering apparatus. The flow amount of Ar and $O_2$, the discharge current, and the design thicknesses for the three basic film configuration examples are shown in Table 1.

Table 1

| sample | film forming parameter | ITO1 | Ag1 | ITO2 | Ag2 | ITO3 |
|---|---|---|---|---|---|---|
| basic film conf. 1 | Ar flow (SCCM) | 98 | 98 | 98 | 98 | 98 |
| | $O_2$ flow (SCCM) | 10 | 0 | 10 | 0 | 10 |
| | discharge current (A) | 6 | 0.9 | 6 | 0.9 | 6 |
| | nominal film thickness (nm) | 28 | 8 | 70 | 10 | 28 |
| basic film conf. 2 | Ar flow (SCCM) | 100 | 100 | 100 | 100 | 100 |
| | $O_2$ flow (SCCM) | 30 | 0 | 30 | 0 | 30 |
| | Discharge current (A) | 30 | 15 | 30 | 15 | 30 |
| | nominal film thickness (nm) | 40 | 7 | 100 | 9 | 40 |
| basic film conf. 3 | Ar flow (SCCM) | 100 | 100 | 100 | 100 | 100 |
| | $O_2$ flow (SCCM) | 30 | 0 | 30 | 0 | 30 |
| | discharge current (A) | 30 | 15 | 30 | 15 | 30 |
| | nominal film thickness (nm) | 36 | 8 | 90 | 10 | 36 |
| Film forming parameters for basic film configurations of the transparent conductive film | | | | | | |

A glass sheet 21 on which films 3 of these basic film configurations have been formed is laminated to a further glass sheet 22 with an intermediate PVB film 23 (thickness: 0.76 mm) serving as a thermoplastic resin film to form laminated glass. The basic film configurations correspond to the Basic Examples 1, 2 and 3. In the Basic Examples 1, 2 and 3, clear glass (2 mm) and green glass (2 mm) were used for the glass sheets.
Basic Example 4 uses the basic film configuration 1 and uses clear glass (2 mm) and clear glass (2 mm). The optical characteristics of the laminated glass sheets using the three basic film configuration examples were measured with a spectrophotometer.
Table 2 shows the optical characteristics (transmittance and reflectance) of these basic examples. These tables also show the optical characteristics of the glass sheets themselves and of laminated glass without the transparent conductive film.

Table 2

| sample | Transmittance of visible light (%) | Transmittance of direct solar (%) | tint | |
|---|---|---|---|---|
| | | | a | b |
| Basic Ex. 1 | 72.1 | 37.0 | -6.4 | 5.0 |
| Basic Ex. 2 | 72.4 | 37.8 | -5.1 | 3.7 |
| Basic Ex. 3 | 71.7 | 34.4 | -6.2 | 2.1 |
| Basic Ex. 4 | 77.1 | 40.9 | -4.1 | 2.9 |
| green glass (2mm) | 85.3 | — | -2.9 | 0.4 |
| clear glass (2mm) | 90.6 | — | -0.6 | 0.1 |
| green + PVB + clear | 83.7 | 62.2 | -3.9 | 1.2 |

Table 2 (continued)

| sample | Transmittance of visible light (%) | Transmittance of direct solar (%) | tint | |
|---|---|---|---|---|
| | | | a | b |
| clear + PVB + clear | 88.8 | 76.7 | -1.3 | 0.3 |
| Transmittance of laminated glass using the basic film configurations | | | | |

As can be seen from Table 2, in all of the basic examples, a window glass with a transparent conductive film was achieved, that has a transmittance of at least 70% for visible light, as is mandatory for automobile windshields, while having excellent sunlight shielding properties and a neutral tint.

A reflectance of at less than 10% for visible light was attained for both sides of the laminated glass in these basic examples, and also the tint of the reflected light was neutral.

Of these three basic film configuration examples, Basic Film Configuration 1 was applied as the transparent conductive film in the following examples.

Example 1

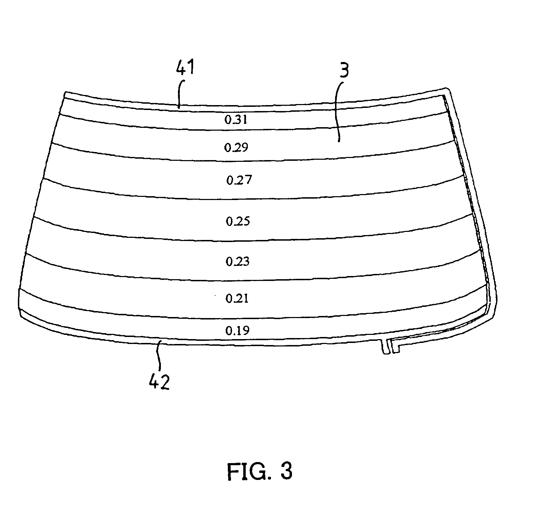

Example 1 shows a window glass in which the amount of heat generated is balanced with respect to the vertical direction of the vehicle window glass. First, the distribution of the specific electric conductivity of the transparent conductive film that is required to for this balancing was determined in a simulation. Also in the following examples, the distribution of the specific electric conductivity was determined by the same technique. The result is shown in Fig. 3.

The specific electric conductivity is inversely proportional to the surface resistance. Due to the setup of the simulation, the following explanations relate to the specific electric conductivity.

Fig. 3 illustrates the distribution of the specific electric conductivity of the transparent conductive film in Example 1. The numbers in Fig. 3 represent the specific electric conductivity in S/m. This is the same in the following embodiments as well.

Fig. 3 shows how in the conductive film 3, the specific electric conductivity increases stepwise from the lower bus bar 42 to the upper bus bar 41. This can be achieved by letting the conductive film 3 become thicker from the lower bus bar 42 to the upper bus bar 41. This change in the film thickness can be stepwise or continuous.

In this Example 1, the differences in the amount of heat that are generated due to the different bus bar lengths are alleviated. To be precise, the specific electric conductivity of the regions where more heat is generated is set to be larger (i.e., the film is made thicker).

The specific electric conductivity of the conductive film is mainly proportional to the thickness of the Ag films with their large specific electric conductivity. For example, to attain a specific electric conductivity of 0.25S/m, the thickness of the Ag film should be about 18 nm. If the Ag films are provided in two layers, their total thickness should be about 18 nm.

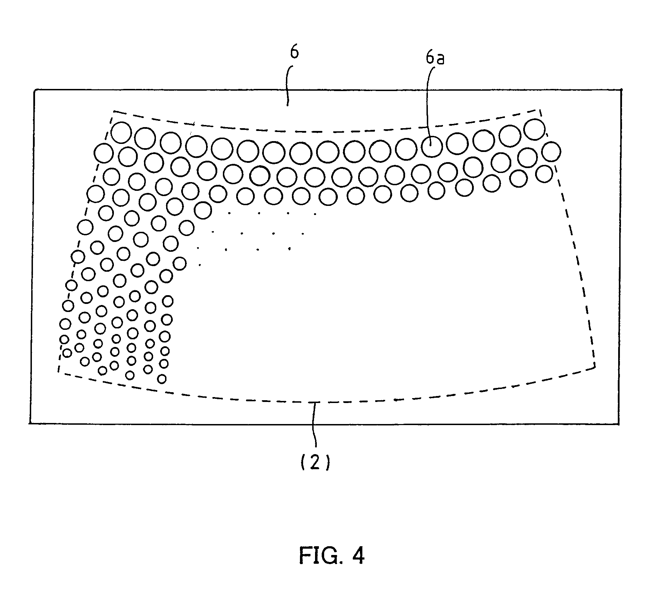

To provide a stepwise change of the film thickness, it is possible to provide at the desired location between the glass sheet and the target a shielding plate 6 (of punched metal) with a pattern of apertures whose aperture ratio changes stepwise. In this case, the aperture pattern 6a extends over the entire shielding plate 6, although this is not shown in Fig. 4.

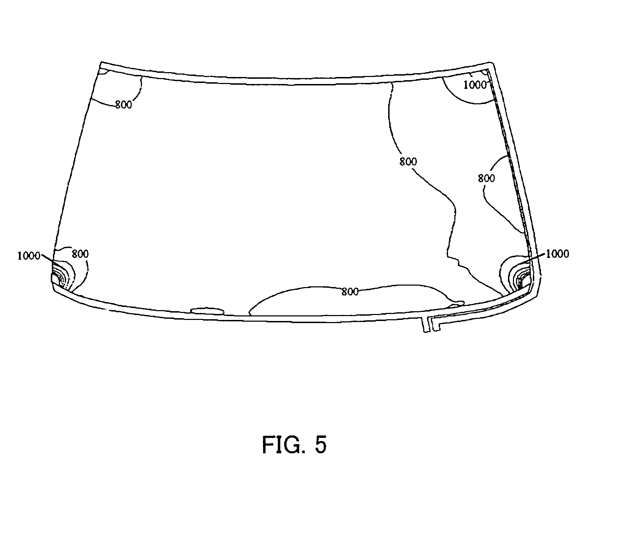

Fig. 5 shows the distribution of the heat generation in a vehicle window glass having the specific electric conductivity distribution shown in Fig. 3. In the Example 1, the voltage applied between the bus bars is 42 V. This is the same for the following embodiments.

The lines in Fig. 5 connect the locations where the same amount of heat is generated and are referred to as "isothermal lines" in the following. The unit used in Fig. 5 is $W/m^2$, and this is the same for the following embodiments.

It can be appreciated from Fig. 5, that the distribution of the heat generation of the transparent conductive film in the Example 1 is much better than in a conventional transparent conductive film having a homogenous film thickness (see Fig. 35).

If the generated heat is 800 to 1000 $W/m^2$, then a laminated glass of 2mm and 2mm glass sheets can be heated to about 50 to 60°C (at 20°C room temperature).

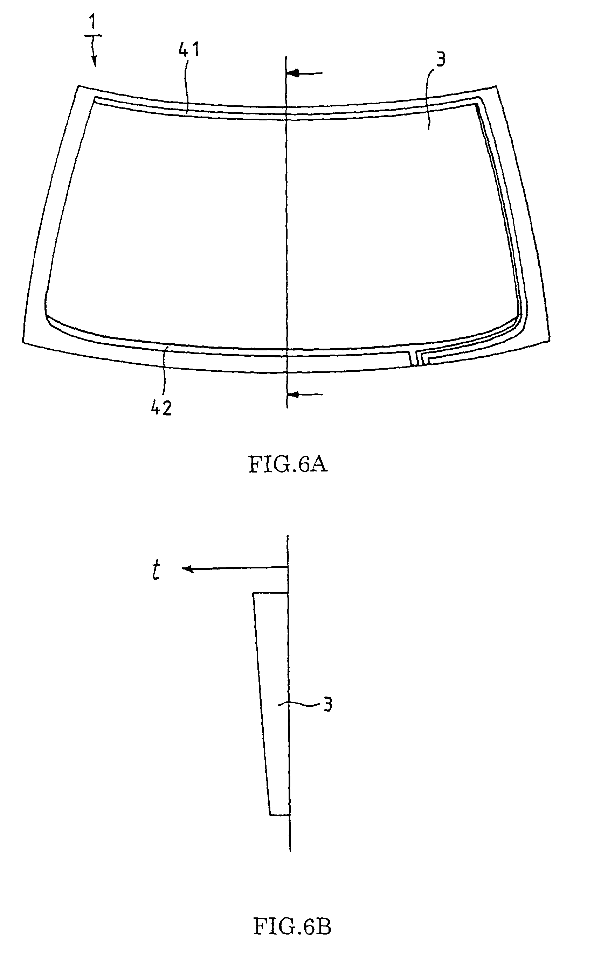

The distribution change of the specific electric conductivity of the transparent conductive film does not have to be stepwise, and can also be continuous. More specifically, it is possible to let the film thickness change continuously (see Fig. 6).

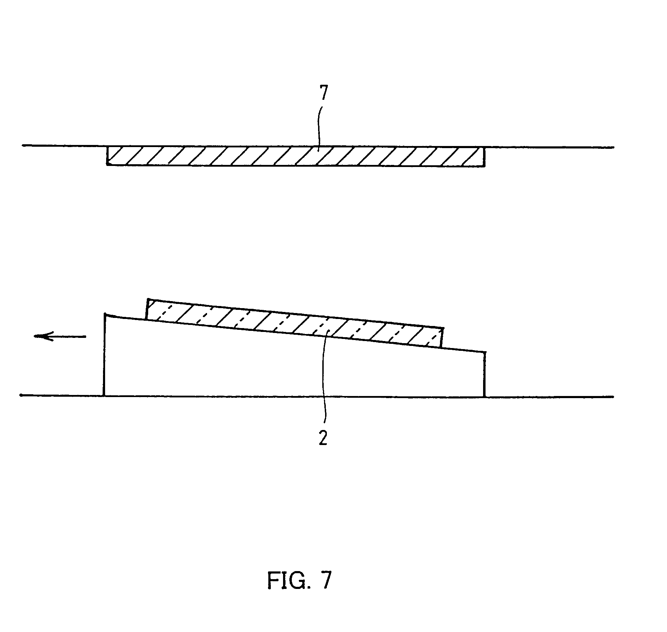

An example of a method for achieving a film thickness that changes continuously across the entire glass sheet is to arrange the edge of the glass sheet on which the film should be thicker closer to the target and to form the film while moving the glass sheet 2 with respect to the target 7 (see Fig. 7). Thus, a film is formed whose thickness changes continuously due to the difference of the amount of sputtered particles adhering to the glass plate.

This method is favorable, because it makes it easy to form a film with changing thickness. It is also possible to use a shielding plate (of punched metal) with an aperture pattern, in which the aperture ratio changes continuously.

Example 2

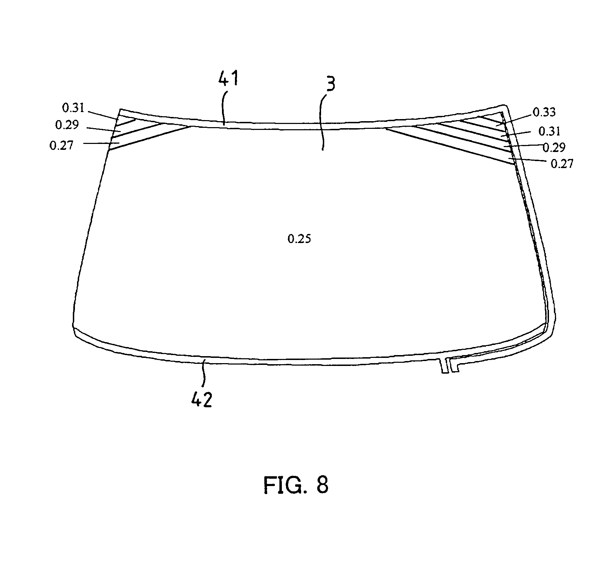

Fig. 8 illustrates the distribution of the specific electric conductivity of the transparent conductive film in Example 2. This Example 2 is a variation, in which the aforementioned example of balancing the amount of heat generated with respect to the vertical direction of the vehicle window glass, as described in Example 1, is applied partially.

In addition, Example 2 takes into account the balancing of the large amounts of heat that are generated in the upper corners of the vehicle window glass.

In Fig. 8, the specific electric conductivity of the conductive film 3 increases from the center toward the upper bus bar 41 along the lateral edges. More specifically, the film thickness increases from the center toward the upper corners.

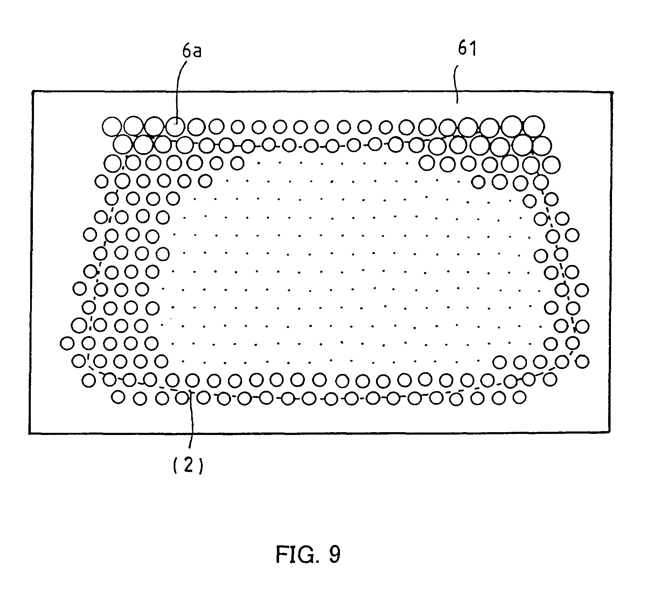

An example of a method for achieving a film thickness that changes continuously in certain portions is to provide a shielding plate 61 (of punched metal) with an aperture pattern 6a, in which the aperture ratio changes continuously at the upper edge (see Fig. 9).

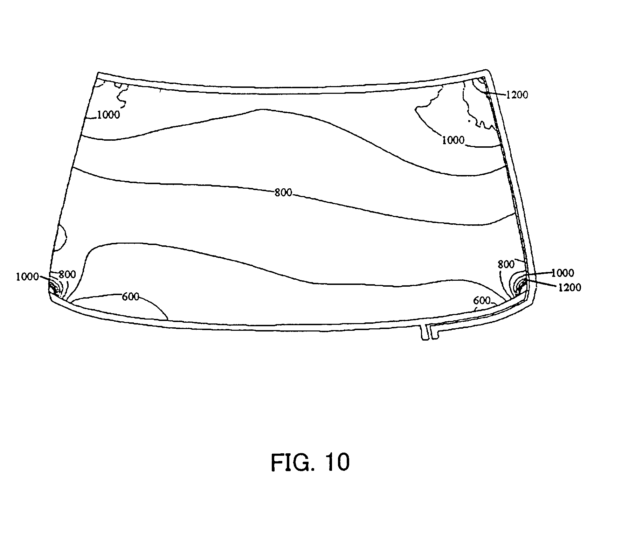

Fig. 10 shows the distribution of the heat generation in a vehicle window glass having the specific electric conductivity distribution shown in Fig. 8.

It can be appreciated from Fig. 10, that the distribution of the heat generated in the upper corners of the transparent conductive film in Example 2 is better than in a conventional transparent conductive film having a homogenous film thickness (see Fig. 35), and that the regions of large heat generation are reduced.

The distribution change of the specific electric conductivity of the transparent conductive film does not have to be continuous, and can also be step-like. More specifically, it is possible to let the film thickness change stepwise.

To achieve a step-like changing film thickness, it is appropriate to use the method explained in Example 1.

Example 3

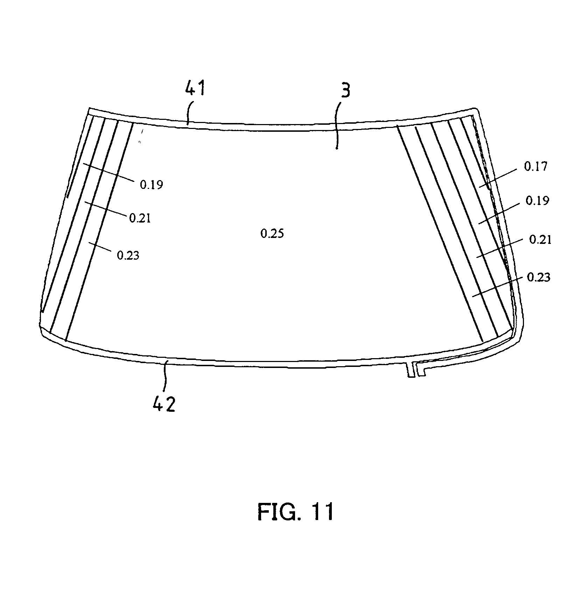

Fig. 11 illustrates the distribution of the specific electric conductivity of the transparent conductive film in Example 3. This Example 3 is an example that alleviates the excessive heat that is caused by the shorter spacing of the upper and lower bus bars at both lateral edges of the vehicle window glass.

If a typical window glass is provided with upper and lower bus bars 41 and 42, then the spacing between the bus bars at both lateral edges of the vehicle window glass is shortened.

It is, however, preferable to arrange the bus bars at the top and the bottom, because this way the difference in the spacing of the bus bars is much smaller than if the bus bars are arranged on the left and right.

In Example 3, the specific electric conductivity of the conductive film 3 becomes smaller from the center toward both lateral edges. More specifically, the conductive film is formed such that it becomes thinner from the center toward both lateral edges.

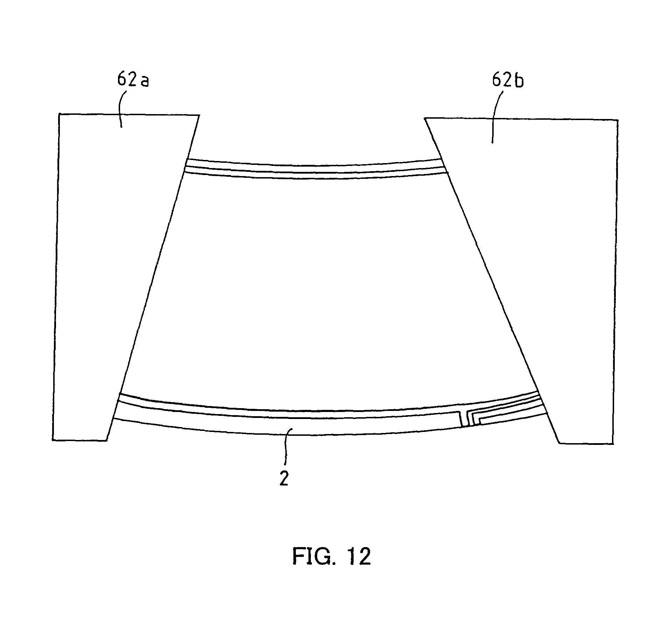

To achieve for example a continuous change of the specific electric conductivity, that is, a continuous change of the film thickness in a portion of the glass sheet, it is suitable to use shielding plates 62a and 62b as shown in Fig. 12 and uses oblique incidence angles during the sputtering.

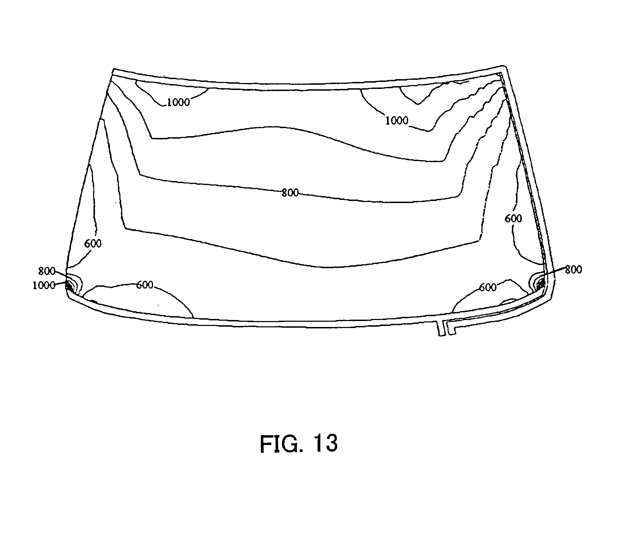

Fig. 13 shows the distribution of the heat generation in a vehicle window glass having the specific electric conductivity distribution shown in Fig. 11.

It can be appreciated from Fig. 13, that the heat generation distribution of the transparent conductive film of the present invention improves the distribution of the generated heat especially near the upper and lower corners of the transparent conductive film.

*Vehicle Window Glasses with Cutouts in the Transparent Conductive Film*

The following discusses windshield glasses with a transparent conductive film, adapted for VICS (Vehicle Information and Communication System) and ETC (Electronic Toll Collections).

Example 4

As shown in Fig. 36, there are regions where large amounts of heat are generated locally near the portions at which cutouts are provided.

However, Example 4 alleviates these regions where large amounts of heat are generated.

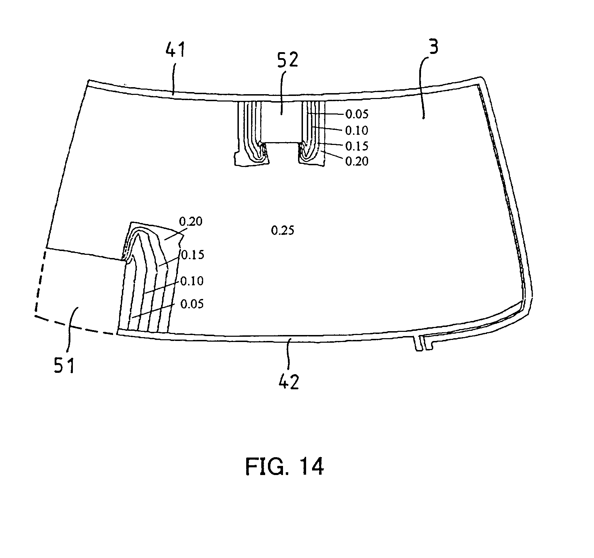

Fig. 14 shows the distribution of the specific electric conductivity of the transparent conductive film of Example 4.

Fig. 14 shows how the specific electric conductivity of the conductive film 3 becomes larger starting at the cutout portions 51 and 52 and following along the direction of the bus bars next to these cutout portions 51 and 52. More specifically, the conductive film is formed such that it becomes thicker starting at the cutout portions and following along the direction of the bus bars next to these cutout portions.

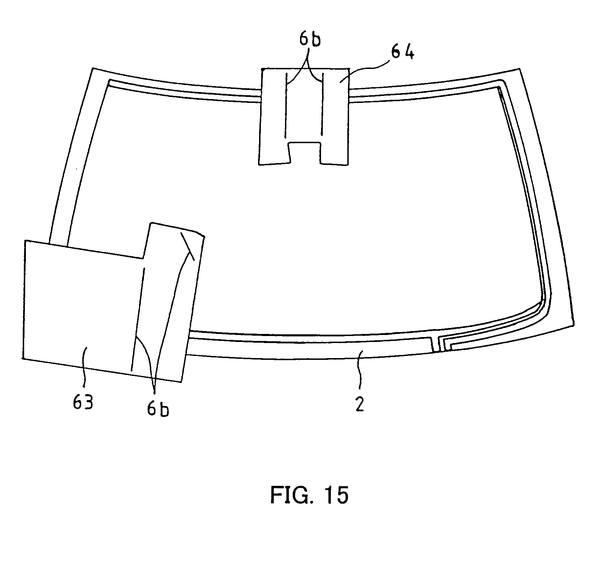

To achieve such a changing film thickness, it is possible to use shielding plates having a certain shape. To achieve a film thickness distribution having the specific electric conductivity shown in Fig. 14, it is possible to use, for example, the shielding plates 63 and 64 arranged as shown in Fig. 15. The desired thickness distribution can be attained by bending these shielding plates at bending lines 6b.

The cutout portion 51 is provided for VICS, and the cutout portion 52 is provided for ETC.

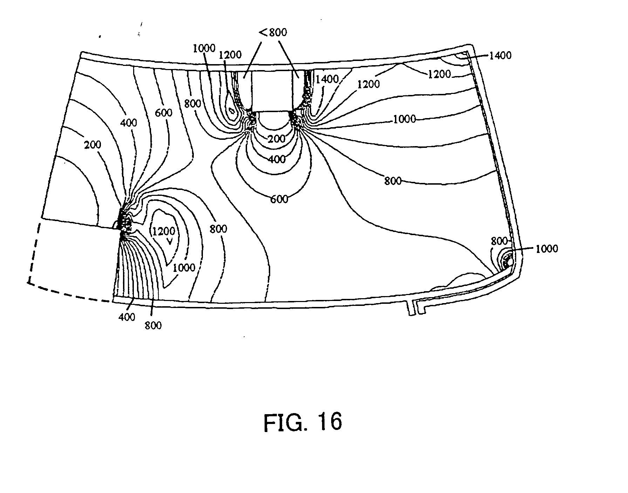

Fig. 16 shows the distribution of the heat generation in a vehicle window glass having the specific electric conductivity distribution shown in Fig. 14. It can be appreciated that, as a result, the surface area of the regions where large amounts of heat are generated is smaller than in the conventional example (see Fig. 36). In particular, the regions where heat amounts of more than 1500 W/m$^2$ are generated have been eliminated.

### Example 5

Example 5 is a variation of Example 4.

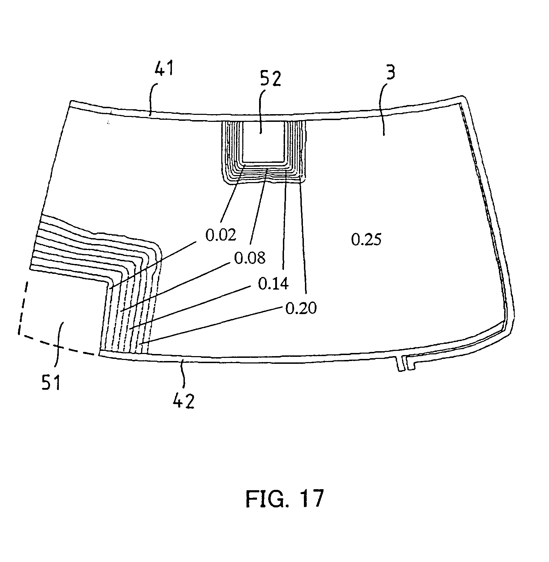

Fig. 17 illustrates the distribution of the specific electric conductivity of the transparent conductive film of Example 5.

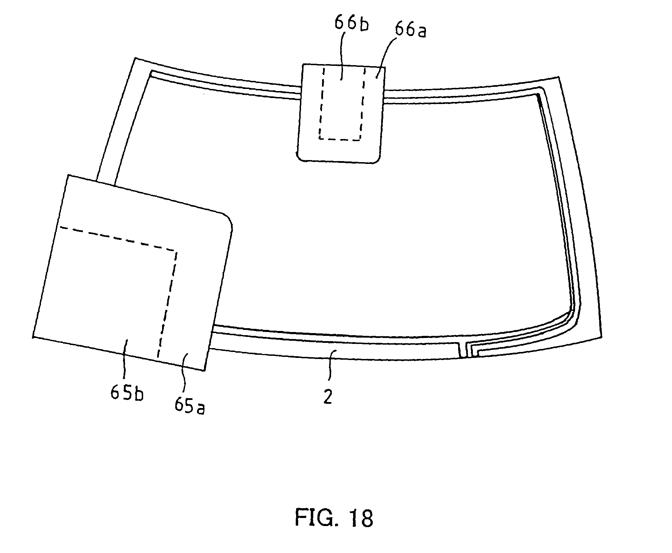

Fig. 17 shows how the specific electric conductivity of the conductive film 3 becomes larger starting at the sides of the cutout portions 51 and 52 and following a direction approximately perpendicular each side of the cutout portions. More specifically, the conductive film is formed such that it becomes thicker starting at the sides of the cutout portions and following a direction approximately perpendicular thereto. To achieve such a film thickness distribution, it is possible to use the shielding plates 65a, 65b, 66a, and 66b shown in Fig. 18. Of these, the shielding plates 65a and 66a are disposed at a certain distance to the glass sheet, whereas the shielding plates 65b and 66b are arranged directly on the glass sheet.

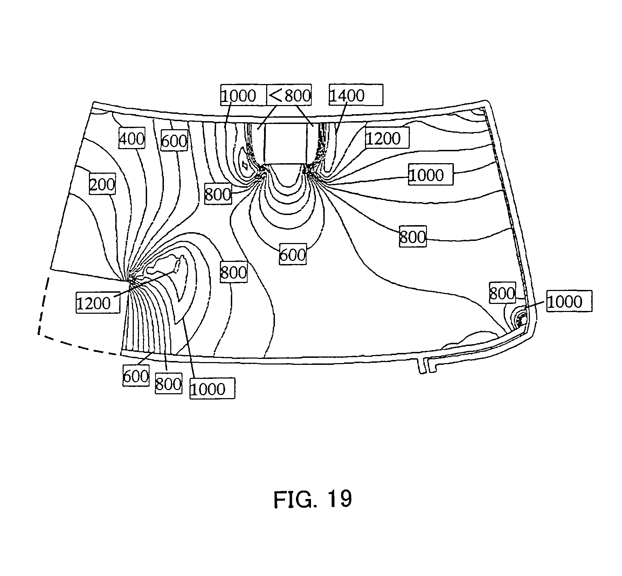

Fig. 19 shows the distribution of the heat generation in a vehicle window glass having the specific electric conductivity distribution shown in Fig. 17. It can be appreciated that, as a result, the surface area of the regions where large amounts of heat are generated is smaller than in the conventional example (see Fig. 36). In particular, the regions where heat amounts of more than 1500 W/m$^2$ are generated have been eliminated.

### Preparatory Example 1

In this Preparatory Example 1, the elimination of the regions where large amounts of heat are generated is discussed from a different viewpoint.

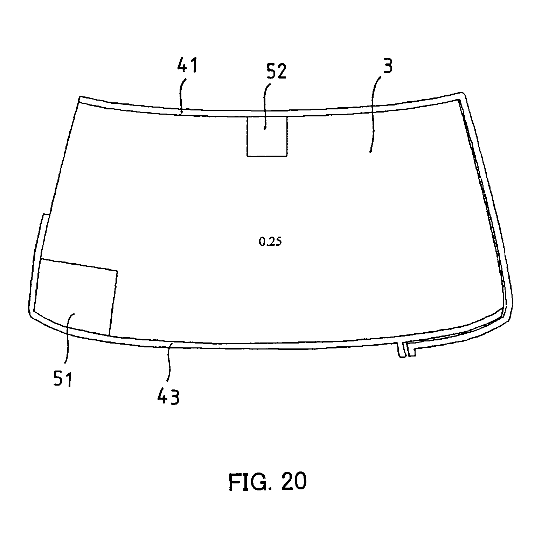

In this Preparatory Example 1, there is a cutout 51 in a corner of the windshield glass, and the bus bar 43 is extended via the corner to the adjacent edge to supply power also to the conductive film at this adjacent edge (see Fig. 20). Here, the specific electric conductivity of the conductive film is uniform.

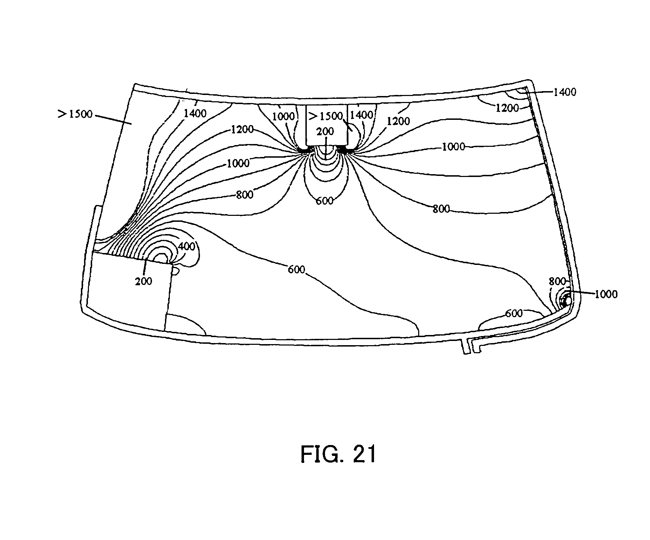

Fig. 21 is the heat generation distribution chart for this case. The region at the cutout portion in the corner where the amount of generated heat is large has been eliminated, but above the cutout portion in the corner in Fig. 21, there is a region where large amounts of heat (1500 W/m$^2$) are generated.

It seems that a large amount of heat is generated there, because the spacing between the extended bus bar at the lower edge and the bus bar at the upper edge is very short above the cutout portion.

If the region where heat of more than, for example, 1500 W/m$^2$ is generated extends over a large area, then there is the danger that the window glass is heated to more than 80°C when current is supplied for longer periods of time, which is not desirable.

### Example 6

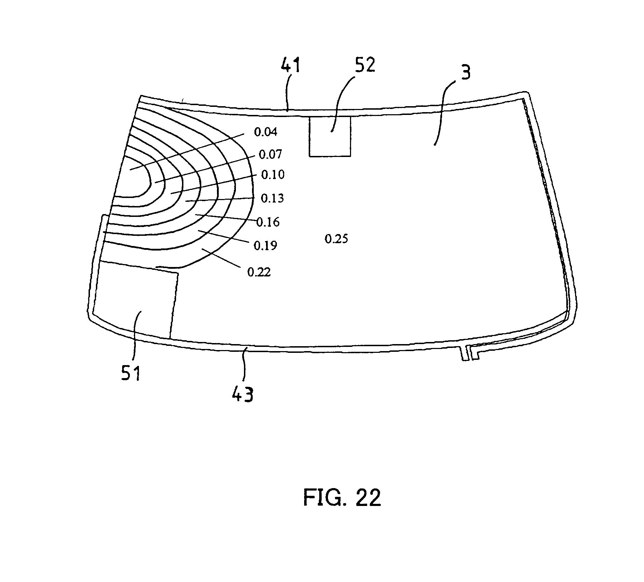

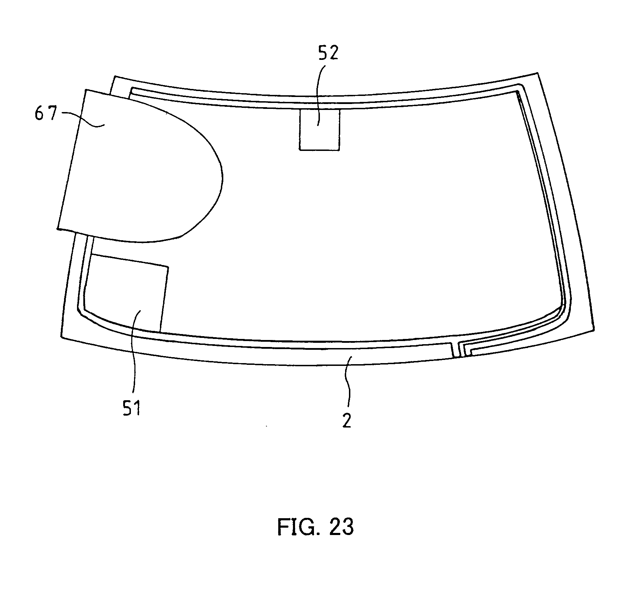

Based on the results of the aforementioned Preparatory Example 1, in this Example 6, the lower bus bar 43 at the cutout portion 51 in the corner is extended to the adjacent edge, and in addition to this, the specific electric conductivity above the cutout portion of this corner is reduced (see Fig. 22). More specifically, the conductive film between the cutout portion 51 and the upper bus bar 41 is made thinner. To achieve such a film thickness distribution, it is possible to use a shielding plate 67 as shown in Fig. 23.

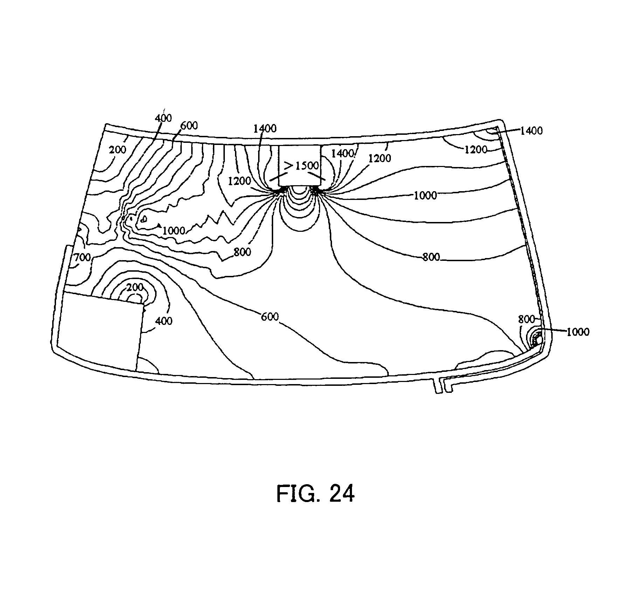

Fig. 24 is the heat generation distribution chart for this case. As can be appreciated from Fig. 24, the region above the cutout portion in the corner where large amounts of heat of more than 1500 W/m$^2$ are generated has been eliminated.

Another region where large amounts of heat of more than 1500 W/m$^2$ are generated can be found at both sides of the cutout portion at the center portion of the upper bus bar. However, its surface area is small, and it is adjacent to the cutout portion, where no heat is generated. Therefore, enough heat is dissipated from this region where no heat is generated, so that high temperatures do not develop.

Example 7

In Example 7, specific electric conductivity distributions are provided at the cutout portion at the center of the upper bus bar, at the right side and at the lower side in the drawing, in addition to those in Example 6.

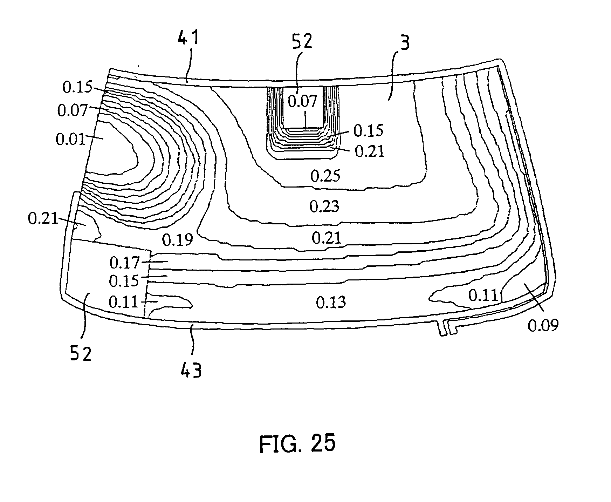

Fig. 25 shows the distribution of the specific electric conductivity with the transparent conductive film in Example 7.

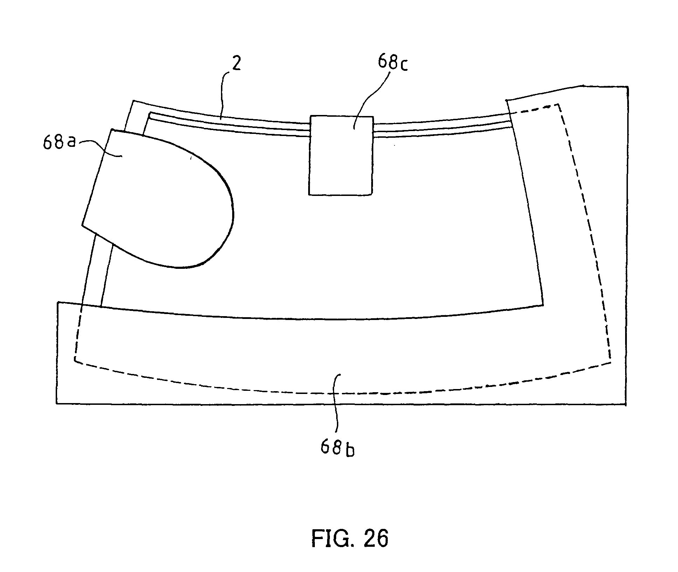

To achieve such a distribution of the specific electric conductivity, that is, to achieve such a film thickness distribution, it is possible to use the shielding plates 68a, 68b, and 68c shown in Fig. 26.

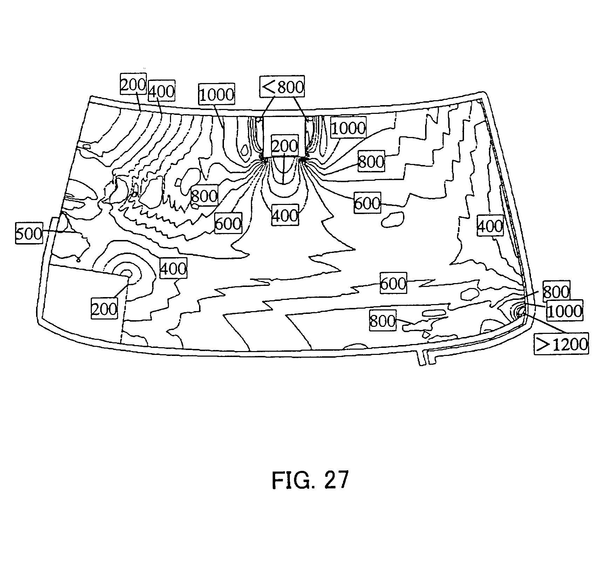

Fig. 27 is the heat generation distribution chart for this case. As can be appreciated from Fig. 27, the region above the cutout portion in the corner where large amounts of heat of more than 1500 W/m$^2$ are generated has been eliminated. In addition, the regions on both sides of the cutout portion at the center of the upper bus bar where large amounts of heat of more than 1500 W/m$^2$ are generated have been eliminated, too.

Example 8

In Examples 4 to 7, portions of the conductive film were cut away completely, to achieve the necessary transmission of electromagnetic waves. It should be noted though, that it is not always necessary to completely cut away these portions to provide sufficient transmission of electromagnetic waves.

Furthermore, in Examples 4 to 7, since the regions where transmission of electromagnetic waves is necessary are cut away completely, there is the inherent problem that the defogging and defrosting function at these portions is insufficient.

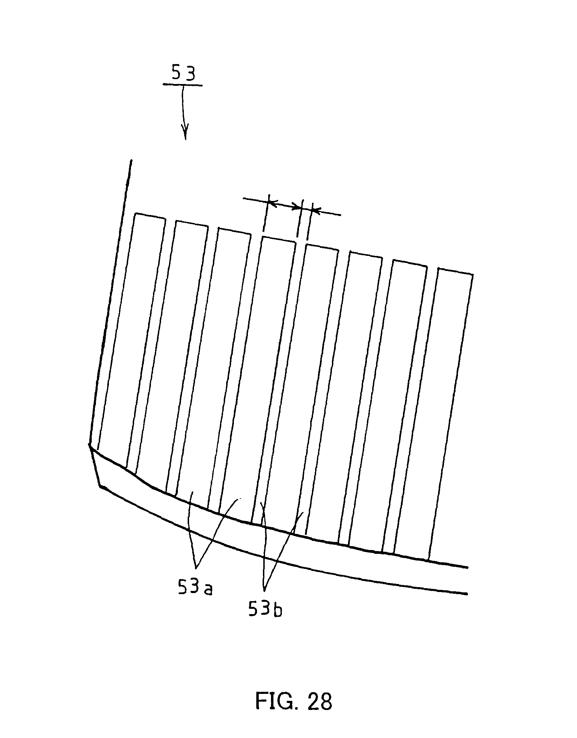

A possibility is, however, to provide comb-shaped cutout portions at the portions of electromagnetic wave transmission. In this manner, it is possible to maintain the defogging and defrosting function to some degree while allowing for electromagnetic wave transmission. Fig. 28 shows a specific pattern of such comb-shaped cutout portions.

The electromagnetic waves used for VICS are not circularly polarized but longitudinal waves or transverse waves, so that these waves can be transmitted when the cutout portions are comb-shaped.

It is preferable that the width of the stripe-shaped conductive portions 53b is not more than 20 mm, so that the maximum temperature when sending a current through the comb-shaped cutout portions does not become too high. Furthermore, in order to preserve the defogging and defrosting function, the width of the portion where no film is formed 53a should not be larger than 50 mm.

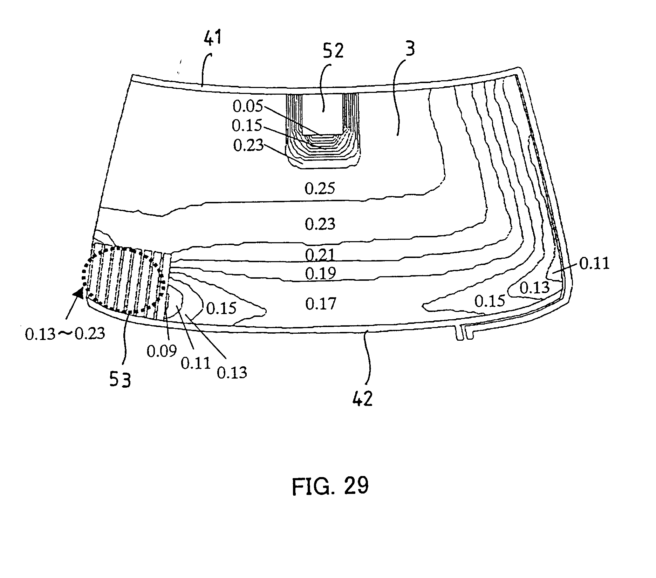

Fig. 29 shows the distribution of the specific electric conductivity with the transparent conductive film in Example 8.

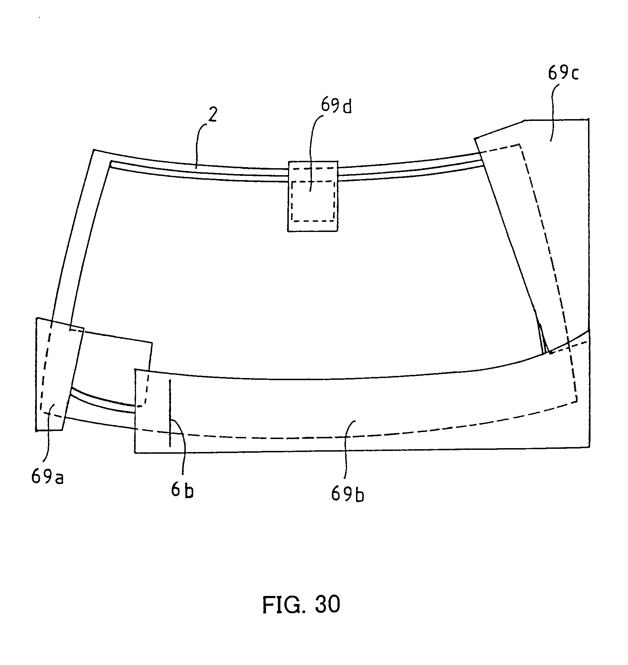

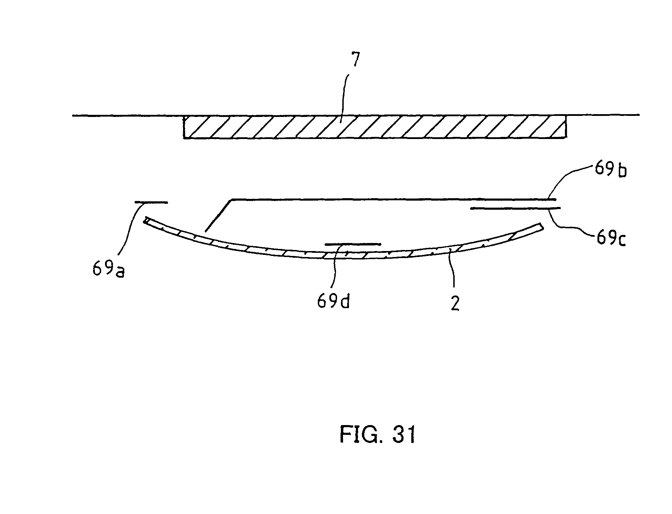

To achieve such a distribution of the specific electric conductivity, that is, to achieve such a film thickness distribution, it is possible to use the shielding plates 69a, 69b, 69c and 69d shown in Fig. 30. For this, the glass sheet, the shielding plates and the target should be arranged as shown in Fig. 31.

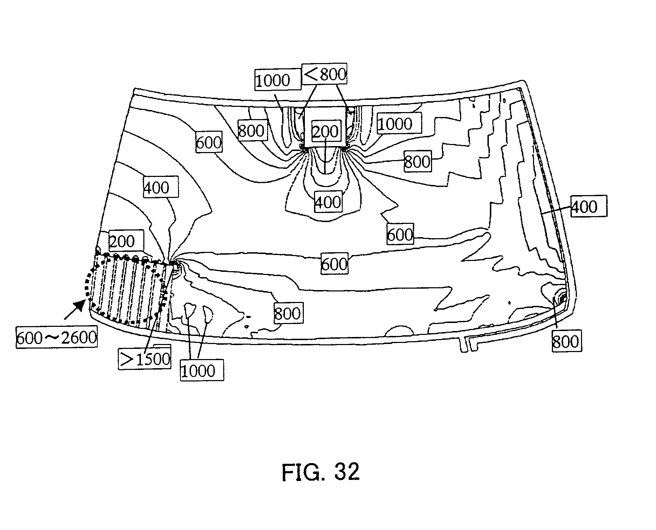

Fig. 32 shows the heat generation distribution of this transparent conductive film. As becomes clear from Fig. 32, in the regions inside and around the comb-shaped cutout portions, large amounts of heat of more than 1500W/m$^2$ are generated, but these regions are adjacent to portion where no film is formed and thus no heat is generated, so that heat is dissipated from these regions, and the temperatures do not rise too high.

Also, in Example 8, the region above the cutout portion in the corner, where the amount of generated heat is small, which could be observed in Example 4, does not occur. This is, because stripe-shaped conductive portions are provided in the cutout portion. Therefore, there is no need for any countermeasures, such as extending the lower bus bar to the adjacent edge.

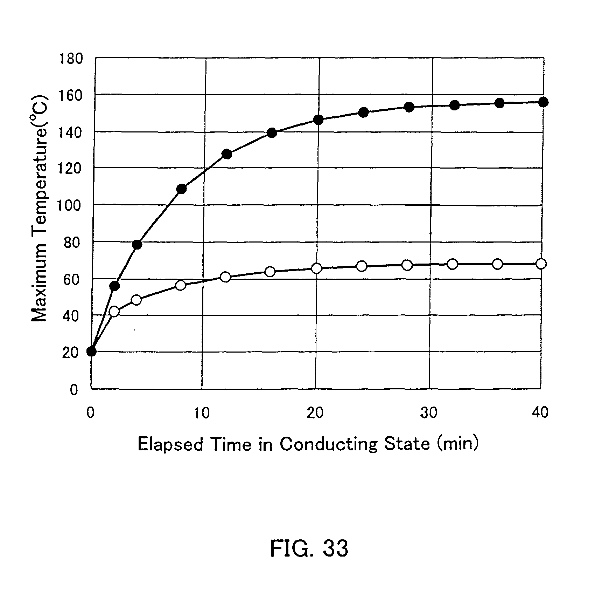

Fig. 33 shows the maximum temperature as a function of the elapsed time in the conducting state, comparing the total heat generation when the transparent conductive film is formed over the entire surface (- • -) to the heat generation with a comb-shaped cutout portion (- o -). Here, the amount of generated heat was set to 3000 W/m$^2$.

As becomes clear from Fig. 33, even at a heat generation amount of 3000 W/m$^2$, the maximum temperature was not more than about 70 °C in the case of comb-shaped cutout portions. Since the amount of heat generated by the transparent conductive film in Fig. 32 is maximally 2600 W/m$^2$, it can be seen that there is no danger that the maximum temperature rises above 70 °C.

Moreover, the comb-shaped cutout portions also alleviate the problem that the defogging and defrosting function becomes insufficient at this portion.

*Electromagnetic wave transmission characteristic*

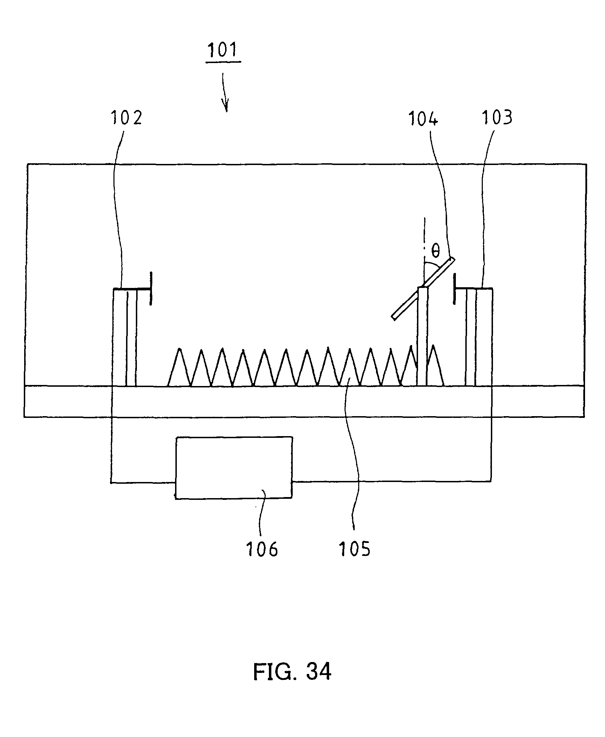

In the above-described Examples 4 to 8, an electromagnetic wave transmission characteristic was measured. Fig. 34 illustrates how the measurements were made. The measurements were made in an anechoic chamber 101 where between a transmitting antenna 102 and a receiving antenna 103 a window glass 104 with a transparent conductive film is interposed as a sample.

In the measurements, a wavelength of 2.5 GHz in a frequency band used for VICS was employed as a representative example. Further, an angle for installing the respective sample window glass with a transparent conductive film was made θ = 60° in view of installing a windshield glass.

As a result, in contrast to the case of a conventional glass without a conductive film, Examples 4 to 7 in which the respective conductive film was provided with cutout portions for electromagnetic wave transmission across a portion necessary for electromagnetic wave transmission showed no decay of electromagnetic waves with the measurements of 0 dB.

Furthermore, also in contrast to the case of the conventional glass without a conductive film, Example 8 in which the conductive film was provided with a comb-shaped portion having cutout portions at a portion necessary for electromagnetic wave transmission met a practical-use level of electromagnetic wave decays with the measurement of 4 dB or less.

On the contrary, also in contrast to the case of the conventional glass without a conductive film, Example 1, for example, in which the conductive film was provided across the entire surface of the glass, showed substantially no electromagnetic wave transmission with an electromagnetic wave transmission decay of 28 dB or less.

The foregoing descriptions confirmed a comparable or highly improved level of electromagnetic wave transmission characteristic of a window glass for a vehicle with a transparent conductive film having a portion necessary for electromagnetic wave transmission which is a comb-shaped portion with cutout portions or a portion provided with cutout portions across the entire portion, compared with the case of a conductive film without cutout portions.

Furthermore, the window glass for a vehicle with a transparent conductive film having cutout portions is practical in an electromagnetic wave transmission characteristic compared with the case of the conductive film without cutout portions.

**Claims**

1. A window glass for a vehicle, comprising:

   a glass sheet; and
   a transparent conductive film and a pair of bus bars for feeding power to the transparent conductive film, the bus bars including a longer bus bar and a shorter bus bar, the transparent conductive film and the bus bars being formed on the glass sheet;

   wherein the surface resistance of the conductive film decreases from the longer bus bar toward the shorter bus bar.

2. A window glass for a vehicle, comprising:

   a glass sheet; and
   a transparent conductive film and a pair of bus bars for feeding power to the transparent conductive film, the transparent conductive film and the bus bars being formed on the glass sheet;

   wherein the surface resistance of the conductive film increases as the spacing between the bus bars is smaller.

3. A window glass for a vehicle, comprising:

   a glass sheet; and
   a transparent conductive film and a pair of bus bars for feeding power to the transparent conductive film, the conductive film being provided with a cutout portion along at least one of the edges of the glass sheet, the transparent conductive film and the bus bars being formed on the glass sheet;

   wherein the surface resistance of the conductive film decreases from the cutout portion along the at least one edge.

4. The window glass according to any of Claims 1 to 3, wherein the surface resistance is changed by changing the film thickness of the conductive film.

5. The window glass according to Claim 4, wherein the film thickness changes continuously.

6. A window glass for a vehicle, comprising:

a glass sheet; and
a transparent conductive film and a pair of bus bars for feeding power to the transparent conductive film, a corner of the conductive film being provided with a cutout portion, the transparent conductive film and the bus bars being formed on the glass sheet;

wherein one of the bus bars turns the said corner and extends to an adjacent edge of the conductive film; and
wherein a region is provided between the cutout portion and the other bus bar where the surface resistance is higher than at other regions of the conductive film.

7. The window glass according to Claim 6, wherein the region with higher surface resistance has a film thickness that is smaller than that of the other regions of the conductive film.

8. A window glass for a vehicle, comprising:

a glass sheet; and
a transparent conductive film and a pair of bus bars for feeding power to the transparent conductive film, the transparent conductive film and the bus bars being formed on the glass sheet;

wherein the conductive film is provided with a comb-shaped portion that has cutout portions in contact with one of the bus bars.

9. The window glass according to any of Claims 1 to 8, wherein the window glass comprises at least two glass sheets and a thermoplastic resin film for bonding the glass sheets, and the conductive film and the bus bars are provided on a surface of one of the glass sheets.

10. The window glass according to any of Claims 1 to 8, wherein the conductive film includes a first metal oxide film, a first Ag film, a second metal oxide film, a second Ag film, and a third metal oxide film that are layered in that order.

11. The window glass according to any of Claims 1 to 8, wherein a ceramic mask is provided at a portion where the bus bars are formed.

12. A method for manufacturing a window glass for a vehicle comprising a glass sheet, and a transparent conductive film and a pair of bus bars for feeding power to the transparent conductive film formed on the glass sheet, the method comprising:

forming the conductive film by sputtering using a sputtering target while arranging a shielding plate at a predetermined position between the glass sheet and the sputtering target.

13. The method according to Claim 12, wherein the shielding plate has an aperture pattern in which the aperture ratio changes continuously or stepwise.

14. A method for manufacturing a window glass for a vehicle comprising a glass sheet, and a transparent conductive film and a pair of bus bars for feeding power to the transparent conductive film formed on the glass sheet, the method comprising:

forming the conductive film by sputtering using a sputtering target while changing the spacing between the glass sheet and the sputtering target.

FIG. 1

FIG. 2

FIG. 3

FIG. 4

FIG. 5

FIG.6A

FIG.6B

FIG. 7

FIG. 8

6a                                    61

( 2 )

FIG. 9

FIG. 10

FIG. 11

FIG. 12

FIG. 13

FIG. 14

FIG. 15

FIG. 16

FIG. 17

66b 66a

65b 65a

2

FIG. 18

FIG. 19

FIG. 20

FIG. 21

FIG. 22

FIG. 23

FIG. 24

FIG. 25

FIG. 26

FIG. 27

FIG. 28

EP 1 168 888 A2

FIG. 29

41

FIG. 30

FIG. 31

FIG. 32

FIG. 33

FIG. 34

FIG. 35

FIG. 36